# EUROPEAN PATENT SPECIFICATION

(11) **EP 2 783 531 B1**
(45) Date of publication and mention of the grant of the patent: **24.02.2016**
(21) Application number: 11790598.4
(22) Date of filing: 25.11.2011
(51) Int. Cl.: H04W 36/00, H04W 88/04

(54) **METHOD FOR HANDING OVER A MOBILE RELAY NODE**
VERFAHREN ZUR WEITERREICHUNG EINES MOBILEN RELAISKNOTENS
PROCÉDÉ DE TRANSFÉRT D'UN NOED MOBILE DE RÉLAIS

(43) Date of publication of application: 01.10.2014
(73) Proprietor: Nokia Solutions and Networks Oy, 02610 Espoo (FI)
(72) Inventor: XU, Xiang, Nanjing 210029 (CN); REDANA, Simone, 81541 Munich (DE); SCHWARZBAUER, Hanns Juergen, 82194 Gröbenzell (DE); WALDHAUSER, Richard, 81249 München (DE)
(74) Representative: Borgström, Markus
(86) International application number: PCT/EP2011/071033
(87) International publication number: WO 2013/075755

(56) References cited:
- WO-A1-2012/138736
- US-A1- 2012 252 355
- CATT: "Discussion on Mobile Relay Architectures", 3GPP DRAFT; R3-112401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 30 September 2011 (2011-09-30), XP050542088, [retrieved on 2011-09-30]
- HUAWEI: "Mobile relay support analysis", 3GPP DRAFT; R3-091778 MOBILE RELAY SUPPORT ANALYSIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353151, [retrieved on 2009-08-20]
- ZTE: "Initial Discussion on the Architecture of Mobile Relay", 3GPP DRAFT; R3-112677-DISCUSSION ON THE ARCHITECTURE OF MOBILE RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 13 October 2011 (2011-10-13), XP050542337, [retrieved on 2011-10-13]
- QUALCOMM EUROPE: "Relay call flows", 3GPP DRAFT; R3-092153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090824, 24 August 2009 (2009-08-24), XP050391678, [retrieved on 2009-09-04]
- INSTITUTE FOR INFORMATION INDUSTRY (III) ET AL: "Handover Procedures for Mobile RN", 3GPP DRAFT; R3-112619, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 1 October 2011 (2011-10-01), XP050542310, [retrieved on 2011-10-01]

## Description

### FIELD OF THE INVENTION

The present invention relates to the field of mobile communication networks and in particular to mobile communication networks supporting handover of a mobile relay node.

### BACKGROUND OF THE INVENTION

Nomadic Relay is standardized in 3GPP Rel-10 to provide coverage enhancement. The Donor eNB (DeNB) embeds and provides the S-GW (Serving Gateway)/P-GW (PDN Gateway)-like functions needed for the relay node (RN) operation. This includes creating a session for the RN and managing EPS bearers for the RN, as well as terminating the S11 1 interface towards a mobility management entity (MME) serving the RN. The P-GW functions in the DeNB allocate an IP address for the RN for the O&M (operation and maintenance system).

High speed public transportation is being deployed worldwide at an increased pace. Hence, providing multiple services of good quality to users on high speed vehicles is important yet more challenging than typical mobile wireless environments also due to the following reasons. For high speed UEs, handover occurs much more frequently. With a mass of UEs performing handover at the same time, the handover success rate is reduced, due to excessive signaling overhead. Furthermore, UE measurements in high speed environments are typically less accurate than low speed environments. Impairments caused by high Doppler include frequency estimation errors and channel estimation errors. The achievable throughput with these impairments can be significantly reduced compared to low speed environment. Specific eNB/UE (user equipment) implementations to combat these impairments are possible, at the expense of additional cost.

Although dedicated network planning may be used to alleviate the above issues, the quality of service for UEs on high speed vehicles remains to be improved. Operators have expressed interest to deploy mobile relay (a relay mounted on a vehicle wirelessly coned to the macro cells) to solve the above problems. Operators also want that the Mobile Relay can be multimode, which can provide service via GSM/UTRAN/WiFi.

A Mobile Relay (MR) is a base station/access point mounted in a moving vehicle. The handover success rate can be improved via Mobile Relay. The MR's gateway (GW) functionalities are located in the DeNB. In this case, the DeNB node might have the functionalities of a normal eNB plus a subset of the functionalities that a S-GW node normally performs and a subset of the functionalities that a P-GW node normally performs. When the MR needs to be handed over to another target DeNB, it needs to relocate the GW functionalities to the target DeNB. But this is not supported by the current 3GPP LTE standard.

"Discussion on Mobile Relay Architectures" by CATT, 3GPP draft; R3-112401, 10-14 October 2011, TSG RAN WG3#73bis; is a standard contribution and discloses several alternative options for handover of mobile relay nodes. It compares the mobile relay mobility support in four fixed relay node architectures in order to propose one that provides the simplest one that can provide support for mobile relays.

"Mobile relay support analysis" by Huawei, 3GPP draft; R3-091778, 24 - 28 August 2008, TSG RAN WG3#65; is a standard contribution and discloses different options for handing over a relay node. It further discloses that handover preparations are effected between the source and the target node, without showing whether a management unit is involved, except for the legacy UE X2 handover procedure over the S1 interface.

In view of the above-described situation, there exists a need for an improved technique for handing over a mobile relay node from a source base station to a target base station. Hence, a system or method being able to provide an efficient and improved handover of mobile relay nodes may be needed.

### SUMMARY OF THE INVENTION

This need may be met by the subject matter according to the independent claims. Advantageous embodiments of the herein disclosed subject matter are described by the dependent claims.

According to a first aspect of the herein disclosed subject matter, there is provided a method for handing over a mobile relay node from a source base station to a target base station, wherein a user equipment is adapted to communicate with a further user equipment using a communication path via the mobile relay node and the source base station by using a first gateway functionality of the source base station, and wherein a management unit is adapted to manage the communication path, the method comprising preparing, by the management unit, a handover of the mobile relay node from the source base station to the target base station, allocating, by the management unit, resources in the target base station for providing a second gateway functionality for a further communication path for the user equipment via the mobile relay node and the target base station to the further user equipment, establishing, by the management unit, the second gateway functionality for the further communication path for the user equipment via the mobile relay node and the target base station to the further user equipment, and handing over, by the the target base station to the further user equipment, and handing over, by the management unit, the mobile relay node from the source base station to the target base station.

The basic idea of the present invention is to provide a method being able to hand over a mobile relay node or mobile relay (MR) from one source base station (source eNB or DeNB) to another target base station (target eNB or DeNB) without losing data.

According to this aspect, when the source DeNB detects a need to initiate a handover of the MR, for instance based on a position or as known in the art, a handover preparation procedure might be initiated, indicating this is a handover (HO) for a MR. Upon reception of this indication, the target DeNB can reserve resources accordingly. The target DeNB can also prioritize resources. The MR's management unit and the mobility management entity (MME) may create the necessary context to manage the resources in the target DeNB.

When the gateway functionality in the target DeNB is ready, the MR starts to use the new gateway for uplink communication (UL). The MR also initiates the switch-over in order to use the gateway functionality located in the target DeNB for downlink communication (DL). The MR's gateway (GW) functionalities may be located or collocated in the target DeNB. In this case, the DeNB node might have the functionalities of a normal eNB plus a subset of the functionalities that a S-GW node normally performs and a subset of the functionalities that a P-GW node normally performs.

The management unit may be a mobility management entity, representing a control-node for the LTE access-network. In addition to the control and management of the MR and the corresponding handover, it may be further responsible for idle mode UE (User Equipment) tracking and paging procedure including retransmissions. It may be involved in the bearer activation/deactivation process and may also be responsible for choosing the S-GW for a UE at the initial attach and at time of intra-LTE handover involving Core Network (CN) node relocation. The management unit may be any kind of unit being capable to manage the communication path for the mobile relay node, and may for example be located in a mobility management entity and a base station. The term "management unit" may also be denoted "management functionality" which may be provided by any appropriate entity in the overall system.

The term "gateway functionality" may denote any part of the system, i.e. of the base stations, providing a gateway for a communication. The gateway functionality may be provided by some resources of the base stations, for instance in combination with a control unit of the base stations.

According to an embodiment of the invention, establishing a gateway (functionality) comprises relocating information being associated with the mobile relay node from the source base station to the target base station.

Information being associated with the mobile relay node may also be denoted as context information. When all context information is relocated, the handover may be performed without loss of data, information and/or connection.

According to a further embodiment of the invention, the information being associated with the mobile relay node comprises information about the user equipment and further user equipments being connected to the mobile relay node.

Thus, all information being associated with the MR, also information about any connected UE, may be relocated before the MR is handed over to the target DeNB.

The source base station may send an updated context information for connected UEs to the MR. This can be done by using a RRC message or a S1/X2 message. In case that the MR re-establishes RRC connection in a non-target, but prepared base station, the new base station might need to convey the updated context information to MR via information elements in a RRC message or S1/X2 message.

New information elements (IE) may be added to the HO preparation messages from the source base station to the target base station. With these, the source base station may provide context information as used by the MR and source base station for the communication between the MR and the source base station, and by the source base station for the communication between the source base station and the UE's management unit. The target base station may then return this list, but for each of the received values that need to be replaced, the target base station may determine and add a replacement value that might be used by the MR for the S1 communication over the Un interface to the target base station.

A new message to the MR may be sent in order to transfer the information being received by the target DeNB. This new message might be sent by the source base station after it has decided which base station is the selected target base station (e.g. for the case that the source base station has prepared more than one target base station for the handover of the MR) and before it sends a RRCConnReconfiguration message to the MR. This new message can be an S1 or X2 message or even a new RRC message or a new IE in the RRCConnReconfiguration message. Alternatively the existing RRCConnReconfiguration message and the new message may be combined into one new message.

MR's MME may know that this is an X2 HO for a MR, so it can relocate the MR's gateway functionalities (S-GW/P-GW) from the source base station to target base station by sending a first Create Session Request message to the S-GW functionality collocated in the target base station using the S-GWfunctionalities' IP address. The Create Session Request message may also indicate that this message is for MR's gateways (S-GW/P-GW) relocation. The Create Session Request message may include the GTP-U DL F-TEID assigned by the target base station and may trigger that the S-GW functionality sends the Create Session Request message to the P-GW functionality collocated in the target base station. This message may be different to the one currently used for X2 HO with S-GW relocation.

Upon the reception of a Create Session Request message indicating this is for MR's gateway (S-GW/P-GW) relocation, the S-GW functionality may send the Create Session Request message to the collocated P-GW functionality. The message may include the S5-U S-GW F-TEID. The P-GW may return the Create Session Response message including the S5-U P-GW F-TEID. Upon the reception of the Create Session Response message, the MME may start a timer T_Del_session.

According to further embodiment of the invention, the method further comprises releasing resources within the source base station being associated with the first gateway functionality after the handover.

When the UL and DL path is switched to use the second gateway functionality collocated in the target DeNB, the MR's MME can initiate releasing any resources with respect to operating the MR at the source DeNB. By releasing the resources in the source DeNB, these resources are available for other applications.

According to a further embodiment of the invention, the method further comprises setting up a communication path, by the management unit, between the target base station and the first gateway functionality in the source base station.

The first gateway functionality and/or the second gateway functionality may comprise both packet data network gateway (P-GW) functionalities and serving gateway (S-GW) functionalities.

The S-GW (Serving Gateway) may route and forward user data packets. For idle state UEs, the S-GW may terminate the downlink data path and trigger paging when downlink data arrives for the UE. It may manage and store UE contexts, e.g. parameters of the IP bearer service, network internal routing information.

The P-GW (PDN Gateway) may provide connectivity from the UE to external packet data networks by being the point of exit and entry of traffic for the UE. A UE may have simultaneous connectivity with more than one P-GW for accessing multiple PDNs. The P-GW may perform policy enforcement, packet filtering for each user, and so on.

According to a further embodiment of the invention, allocating resources comprises allocating resources being associated with the second gateway functionality in order to setup the communication path between the target base station and the second gateway functionality.

Resources may be allocated for the packet data network gateway and the serving gateway functionalities. Resources in the target DeNB may be allocated for both gateway functionalities, as well as for further gateways or other applications, if necessary.

According to a further embodiment of the invention, the method further comprises, before initiating the handover, exchanging messages between the source base station and the target base station in order to determine whether the target base station has the capability to support a mobile relay node.

According to this embodiment, the source DeNB and the target DeNB may exchange the capability on whether support MR or not. This may ensure that the source DeNB only selects an eNB supporting MR as the target during the S1/X2 HO for the MR.

According to a further embodiment of the invention, handing over the mobile relay node comprises changing the communication path from the first gateway (functionality) to the further communication path of the second gateway (functionality).

After allocating resources in the target DeNB and relocating necessary context information, the communication path may be changed from the source DeNB to the target DeNB by using the second gateway in the target DeNB.

According to a further embodiment of the invention, the method further comprises transferring the management of the mobile relay node from the management unit to a further management unit.

When there is a need to relocate the MR's MME, the MR's MME may initiate the relocation procedure. An enhanced DNS procedure may be used for the new MME to know the IP address for the S-GW functionality collocated in the target DeNB. An enhanced Create Session procedure may be used by the MR's S-GW functionality to select the P-GW functionality collocated in the target DeNB for the MR and create the context for the MR.

According to a further embodiment of the invention, transferring the management of the mobile relay node comprises sending information being associated with the gateway functionalities for the mobile relay node from the management unit to the further management unit.

The new management unit may then have all necessary information to proceed with the management and control of the MR.

In the following, an example of a handover of the MR is described. The source base station may know whether the target base station supports Mobile Relay. The source base station may initiate the S1 HO preparation procedure. The HO Req message may indicate this is for MR, and may include additional context information for all connected UEs, for instance used by the MR and source base station for the communication between the MR and the source base station, and by the source base station for the communication between the source base station and the UE's MME/S-GW. The exchanged information from source to target base station may not be restricted to the lists of the old context information as they were used by the source side, but may also contain further information from the source side (source base station and/or MR) like corresponding QoS information, e.g. the Quality Class Indicator (QCI) or even the complete UE specific context that is stored at the source base station for each of the UEs that are connected to the MR.

The MR's source MME may select the target MME based on the target base station's TAI, eNB ID, and the indication whether the target MME supports MR. Another option is to reuse the current DNS procedure, but create a separate DNS database only to be used for MR's MME/S-GW selection. The MR's source MME may send a Forward Relocation Request message to the target MME. The message may indicate this is for MR. The message may also contain the additional context information for connected UEs, which is received from the source base station.

Upon the reception of the enhanced Forward Relocation Request message, the target MME may use an enhanced DNS procedure to retrieve the IP address for the S-GW functionality collocated in the target base station. The target MME then may send a Create Session Request message indicating the relocation of MR's gateway functionalities (S-GW/P-GW) to the S-GW functionality collocated in the target base station, and may trigger the S-GW functionality to send the Create Session Request message to the P-GW functionality collocated in the target base station.

Upon the reception of Create Session Request message indicating this is for MR's gateways functionality (S-GW/P-GW) relocation, the S-GW functionality may send the Create Session Request message to the collocated P-GW functionality. The Create Session Request message may include the GTP-U DL F-TEID assigned by the Target base station. The P-GW may return the Create Session Response message including the S5-U P-GW F-TEID. The S-GW functionality may acknowledge with Create Session Response message.

According to a further embodiment of the invention, the method further comprises establishing, by the further management unit, a communication path for the user equipment via the second gateway functionality.

After the handover or transfer of the management from the management unit to the further management unit, the further management unit may take over the management and control of the MR and may therefore establish a connection to the second gateway functionality.

According to a second aspect of the invention, a management unit for handing over a mobile relay node from a source base station to a target base station may be provided, wherein a user equipment is adapted to communicate with a further user equipment using a communication path via the mobile relay node and the source base station by using a first gateway functionality of the source base station, and wherein the management unit is adapted to manage the communication path. The management unit comprises a control unit being adapted to prepare a handover of the mobile relay node from the source base station to the target base station, being adapted to allocate resources in the target base station for providing a second gateway functionality for a further communication path for the user equipment via the mobile relay node and the target base station to the further user equipment, being adapted to establish the second gateway functionality for the further communication path for the user equipment via the mobile relay node and the target base station to the further user equipment, and being adapted to hand over the mobile relay node from the source base station to the target base station.

When a handover of the mobile relay node is necessary, the management unit may initiate the handover of the mobile relay node from the source base station to the target base station.

It should be noted in this context that the handover (HO) is actually initiated by the source DeNB. This decision of the DeNB is based on measurement reports that the MR, in its role of acting like an ordinary UE, sends to the source DeNB. This might be valid for both methods (X2 HO messages based and S1 HO messages based).

In some point in time during the HO procedure the source DeNB (S1 based) or the target DeNB (X2 based) sends a message to the management unit which informs the management unit about the need to initiate the new gateway functionality(ies). For S1 based HO, the management unit is informed very early, i.e. during the HO preparation. For X2 based HO informing the management unit might occur very late, i.e. the actual handover of the MR has already been executed and the continuation of uplink and downlink user traffic is only possible thanks to further enhancements to the HO messages and e.g. new messages which allow establishing U-plane data forwarding tunnels between the source and target DeNBs.

Therefore, the management unit may allocate resources in the target base station for providing a second gateway functionality for a communication path for the user equipment via the mobile relay node and the target base station to the further user equipment. After allocating the resources, the management unit may establish the second gateway functionality for the communication path for the user equipment via the mobile relay node and the target base station to the further user equipment and may hand over the mobile relay node from the source base station to the target base station.

The base stations may be any type of access point or point of attachment, which is capable of providing a wireless access to a telecommunication network. Thereby, the wireless access may be provided for a mobile relay node or for any other network element, which is capable of communicating in a wireless manner.

The base stations may each comprise a receiver as known by a skilled person. The base stations may also comprise a transmitter. The receiver and the transmitter may be implemented as one single unit, for example as a transceiver. The transceiver or the receiving unit and the transmitter may be adapted to communicate with network elements, for example the mobile relay node, via an antenna.

The management unit may be any kind of unit being capable to manage the communication path for the mobile relay node, and may for example be located in a mobility management entity and a base station.

The management unit may comprise a control unit being adapted to initiate or prepare a handover of the mobile relay node from the source base station to the target base station, being adapted to allocate resources in the target base station for providing a second gateway for a further communication path for the user equipment via the mobile relay node and the target base station to the further user equipment, being adapted to establish the second gateway for the further communication path for the user equipment via the mobile relay node and the target base station to the further user equipment, and being adapted to hand over the mobile relay node from the source base station to the target base station. The control unit may be implemented for example as part of a standard control unit, like a CPU or a microcontroller, or may be implemented as a single unit.

The user equipments (UE) may be any type of communication end device, which is capable of connecting with the described mobile relay node. The UEs may be in particular a cellular mobile phone, a Personal Digital Assistant (PDA), a notebook computer, a printer and/or any other movable communication device.

The user equipments may comprise a transceiver for transmitting and/or receiving signals to/from the mobile relay node and the base stations. The transceiver may comprise a transmitting unit and a receiving unit. The transmitting unit may be a transmitter as known by a skilled person, and the receiving unit may be a common known receiver. The transceiver or the receiving and the transmitting unit may be adapted to communicate with the base station and the mobile relay node via an antenna.

The mobile relay node may be any type of access point or point of attachment, which is capable of extending a wireless access to a telecommunication network. Thereby, the wireless network may be extended over wide areas by using one or more relay nodes between a base station and a user equipment. In case such a relay node is provided for mobile extension of the network, the relay node may be called mobile relay node.

The mobile relay node may comprise a receiver as known by a skilled person. The mobile relay node may also comprise a transmitter. The receiver and the transmitter may be implemented as one single unit, for example as a transceiver. The transceiver or the receiving unit and the transmitter may be adapted to communicate with network elements, for example the user equipment or the base stations, via an antenna.

According to a third aspect of the invention, a network system for handing over a mobile relay node from a source base station to a target base station is provided, wherein a user equipment is adapted to communicate with a further user equipment using a communication path via the mobile relay node and the source base station by using a first gateway of the source base station, the network system comprising a management unit as described above.

Generally herein, the method and embodiments of the method according to the first aspect may include performing one or more functions described with regard to the second or third aspect or an embodiment thereof. Vice versa, the management unit or cellular network system and embodiments thereof according to the second and third aspect may include units or devices for performing one or more functions described with regard to the first aspect or an embodiment thereof.

According to a fourth aspect of the herein disclosed subject-matter, a computer program for handing over a mobile relay node from a source base station to a target base station, is provided, the computer program being adapted for, when executed by a data processor assembly, controlling the method as set forth in the first aspect or an embodiment thereof.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a cellular network system, a management unit and a method of handing over a mobile relay node from a source base station to a target base station. It has to be pointed out that of course any combination of features relating to different aspects of the herein disclosed subject matter is also possible. In particular, some embodiments have been described with reference to apparatus type embodiments whereas other embodiments have been described with reference to method type embodiments. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Figure 1 shows a network system according to an exemplary embodiment of the invention.
Figure 2 shows a conventional network system.
Figure 3 shows a message flow diagram according to the conventional network system of Figure 2.
Figure 4 shows a network system according to an exemplary embodiment of the invention.
Figure 5 shows a message flow diagram according to the network system of Figure 4 according to an exemplary embodiment of the invention.
Figure 6 shows a message flow diagram according to the network system of Figure 4 according to an exemplary embodiment of the invention.
Figure 7 shows a message flow diagram according to the network system of Figure 4 according to an exemplary embodiment of the invention.
Figures 8 to 10 show a network system in different states according to an exemplary embodiment of the invention.
Figure 11 shows a message flow diagram according to a network system according to an exemplary embodiment of the invention.

### Detailed Description

The illustration in the drawing is schematically. It is noted that in different figures, similar or identical elements are provided with the same reference signs.

In the following, embodiments of the herein disclosed subject matter are illustrated with reference to the drawings and reference to aspects of current standards, such as LTE. However, such reference to current standards is only exemplary and should not be considered as limiting the scope of the claims.

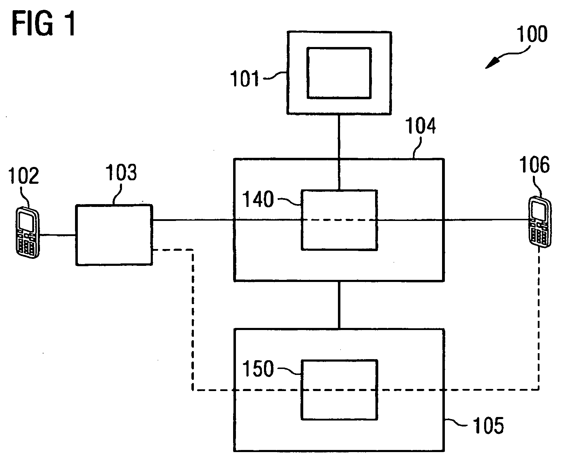

Figure 1 shows a network system 100 according to an exemplary embodiment. The network system comprises a management unit 101. The network system comprises further a source base station 104 and a target base station 105.

A user equipment 102 is adapted to communicate with a further user equipment 106 using a communication path via a mobile relay node 103 and the source base station by using a first gateway functionality 140 of the source base station 104. The management unit 101 is adapted to manage the communication path.

When a handover of the mobile relay node 103 is necessary, the management unit 101 initiates a handover of the mobile relay node from the source base station 104 to the target base station 105. Therefore, the management unit allocates resources in the target base station 105 for providing a second gateway functionality 150 for a communication path for the user equipment via the mobile relay node and the target base station to the further user equipment. After allocating the resources, the management unit establishes the second gateway functionality for the communication path for the user equipment via the mobile relay node and the target base station to the further user equipment and hands over the mobile relay node from the source base station to the target base station.

The base stations 104, 105 may be any type of access point or point of attachment, which is capable of providing a wireless access to a telecommunication network. Thereby, the wireless access may be provided for a mobile relay node or for any other network element, which is capable of communicating in a wireless manner.

The base stations comprise each a receiver as known by a skilled person. The base stations may also comprise a transmitter. The receiver and the transmitter may be implemented as one single unit, for example as a transceiver. The transceiver or the receiving unit and the transmitting unit may be adapted to communicate with network elements, for example the mobile relay node, via an antenna.

The management unit 101 may be any kind of unit being capable to manage the communication path for the mobile relay node, and may for example be located in a mobility management entity and in a base station.

The management unit 101 comprises a control unit being adapted to initiate or prepare a handover of the mobile relay node 103 from the source base station 104 to the target base station 105, being adapted to allocate resources in the target base station for providing a second gateway 150 for a further communication path for the user equipment 102 via the mobile relay node and the target base station to the further user equipment, being adapted to establish the second gateway functionality for the further communication path for the user equipment via the mobile relay node and the target base station to the further user equipment 106, and being adapted to hand over the mobile relay node from the source base station to the target base station. The control unit may be implemented for example as part of a standard control unit, like a CPU or a microcontroller, or may be implemented as a single unit.

The user equipments (UE) 102, 106 may be any type of communication end device, which is capable of connecting with the described mobile relay node. The UEs may be in particular a cellular mobile phone, a Personal Digital Assistant (PDA), a notebook computer, a printer and/or any other movable communication device.

The user equipments may comprise a transceiver for transmitting and/or receiving signals to/from the mobile relay node and the base stations. The transceiver may comprise a transmitting unit and a receiving unit. The transmitting unit may be a transmitter as known by a skilled person, and the receiving unit may be a common known receiver. The transceiver or the receiving unit and the transmitting unit may be adapted to communicate with the base station and the mobile relay node via an antenna.

The mobile relay node may be any type of access point or point of attachment, which is capable of extending a wireless access to a telecommunication network. Thereby, the wireless network may be extended over wide areas by using one or more relay nodes between a base station and a user equipment. In case such a relay node is provided for mobile extension of the network, the relay node may be called mobile relay node.

The mobile relay node comprises a receiver as known by a skilled person. The mobile relay node also comprises a transmitter. The receiver and the transmitter may be implemented as one single unit, for example as a transceiver. The transceiver or the receiving unit and the transmitting unit may be adapted to communicate with network elements, for example the user equipment or the base stations, via an antenna.

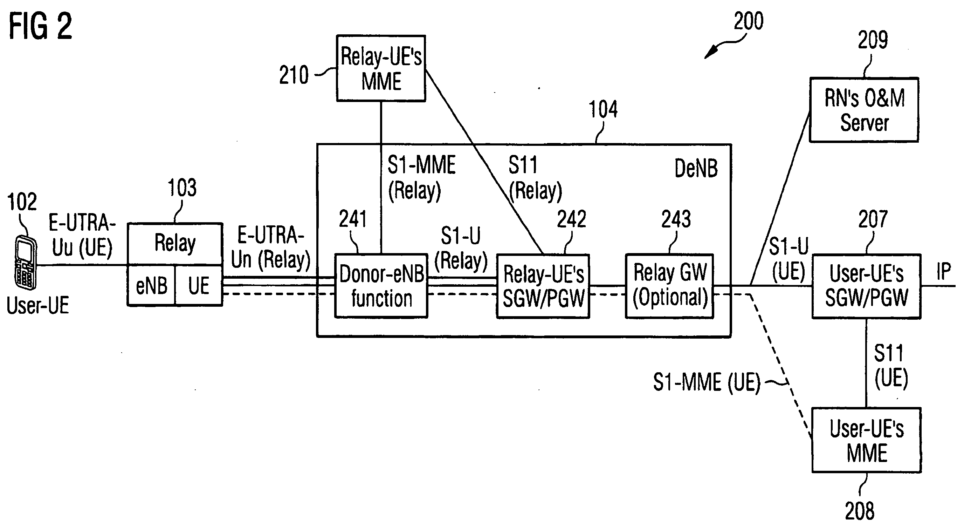

Mobile relay nodes, or Nomadic Relay, are standardized in 3GPP Rel-10 to provide coverage enhancement. Figure 2 illustrates the relay architecture 200 defined in 3GPP Rel-10. The DeNB (Donor enhanced eNodeB, or base station) 104 embeds and provides the S-GW (serving gateway)/P-GW (data packet network gateway)-like functions 242 needed for the RN (relay node) 103 operation. This includes creating a session for the RN and managing EPS bearers for the RN, as well as terminating the S11 interface towards the mobility management entity (MME) 210 serving the RN. The P-GW functions in the DeNB allocate an IP address for the RN for the O&M (operation and maintenance) entity 209.

A user equipment (UE) 102 may communicate in this architecture via the RN and the DeNB (including DeNB functions 241 provided by the DeNB 104) and eventually via an optional relay gateway 243 with a further UE (not shown). This UE can be coupled to the DeNB via serving and packet gateway (S-GW/P-GW) 207 and may be controlled by a MME 208.

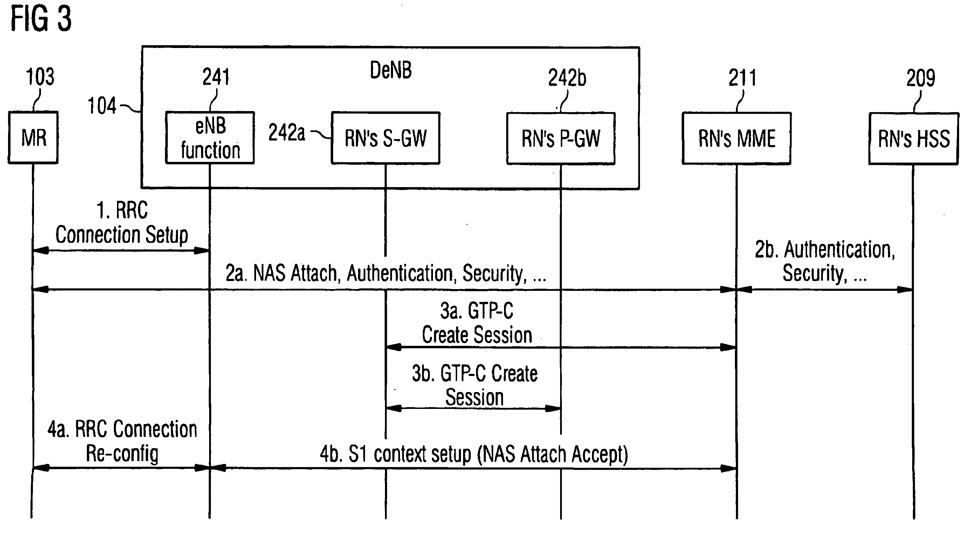

Similar to a normal UE, the RN's MME select the RN's P-GW functionality during the RN's attach procedure. The RN's P-GW functionality is collocated in the DeNB. The attach procedure is shown in Figure 3. The DeNB and the MR exchange messages of a RRC connection setup (step 1). The RN's MME exchanges messages with the RN's HSS as well as the MR for NAS attach, authentication, and so on (step 2a, 2b). After this, the DeNB can exchange messages with the RN's MME as well as internally between the S-GW and the P-GW functionalities (242a, 242b) for creating a GTP-C session (step 3a, 3b). Creating a GTP-C session can also be omitted. Then, messages are exchanged between the MR and the DeNB for a RRC connection configuration (4a) and between the DeNB and the RN's MME for an interface (S1) context setup (4b).

Using mobile relays might become more important and therefore it might be necessary to provide a handover of a mobile relay also due to the following reasons:
- Reduced handover success rate: for high speed UEs, handover occurs much more frequently. With a mass of UEs performing handover at the same time, the handover success rate is reduced, due to excessive signaling overhead and the fact that tracking area update between the MR and the source DeNB, and by the source DeNB for the communication between the source DeNB and the UE's MME/S-GW (TAU) is provided in a short time period. Furthermore, UE measurements in high speed environments are typically less accurate than low speed environments.
- Degraded throughput due to high Doppler effects: impairments caused by high Doppler shift include frequency estimation errors and channel estimation errors. The achievable throughput with these impairments can be significantly reduced compared to low speed environment. Specific eNB/UE implementations to combat these impairments are possible, at the expense of additional cost.

Although dedicated network planning may be used to alleviate the above issues, the quality of service for UEs on high speed vehicles remains to be improved. Operators have expressed interest to deploy mobile relay (a relay mounted on a vehicle wirelessly connected to the macro cells) to solve the above problems. Operators also want the Mobile Relay can be multimode, which can provide service via GSM/UTRAN/WiFi. A Mobile Relay (MR) is a base station/access point mounted in a moving vehicle likely to provide at least the following key functions:
1) Wireless connectivity service to end users inside the vehicle
2) Wireless backhauling connection to on-land network
3) Capability to perform group mobility
4) Capability to allow different air interface technologies on the access link

Handover (HO) success rate can be improved via Mobile Relay. The MR's gateway functionalities (P-GW and S-GW) are collocated in the DeNB. When the MR is handovered to another DeNB, it needs to relocate the gateway functionalities to the target DeNB. But this is not supported by current 3GPP LTE standard, thus is causing an issue for the PDN connection that is using these gateway functionalities in the DeNB. In addition, currently the UE context in the P-GW is removed when the PDN connection is disconnected.

Thus, a method is required to relocate the gateway functionalities (GW) from the source DeNB to target DeNB, and, in addition, release the context related to the gateway functionalities in the source DeNB after the mobile relay has handovered to the target DeNB.

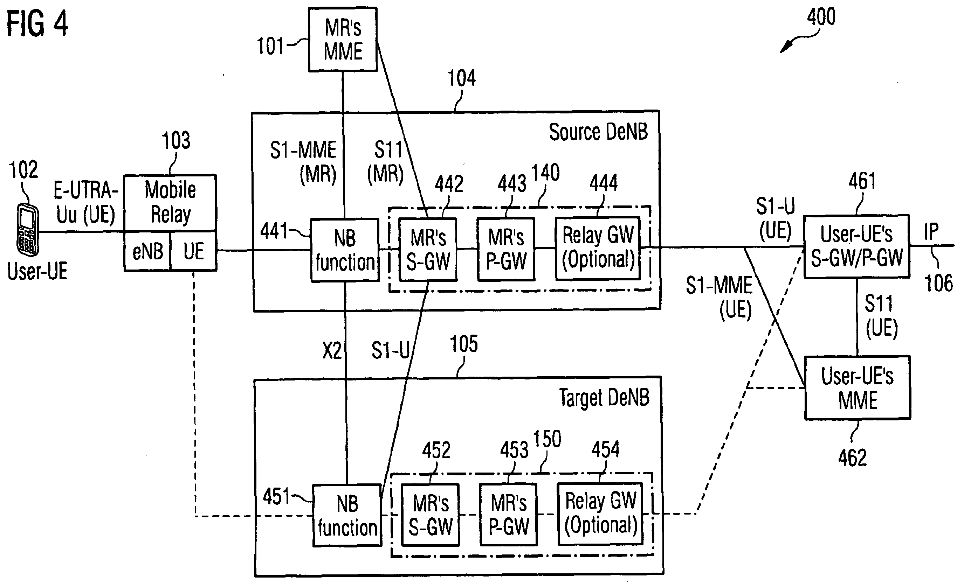

A network system 400 supporting the relocation of the gateway functionalities according to Figure 1 is shown in Figure 4. A new S1-U interface is added between the DeNBs, in detail, the eNB function 451 in target DeNB have S1-U interface with the S-GW function 442 in source DeNB. As in Figure 2, the DeNBs 104 and 105 provides a S-GW functionalities 442, 452 and P-GW functionalities 443, 453 for the mobile relay node 103. Also optional relay gateways 444, 454 can be provided. Also, the further UE 106 can be coupled with the DeNBs via a S-GW/P-GW 461 being managed by a UE's MME 462. The DeNB function part 441 of the source DeNB 104 and the DeNB function part 451 of the target DeNB can communicate via a X2 interface.

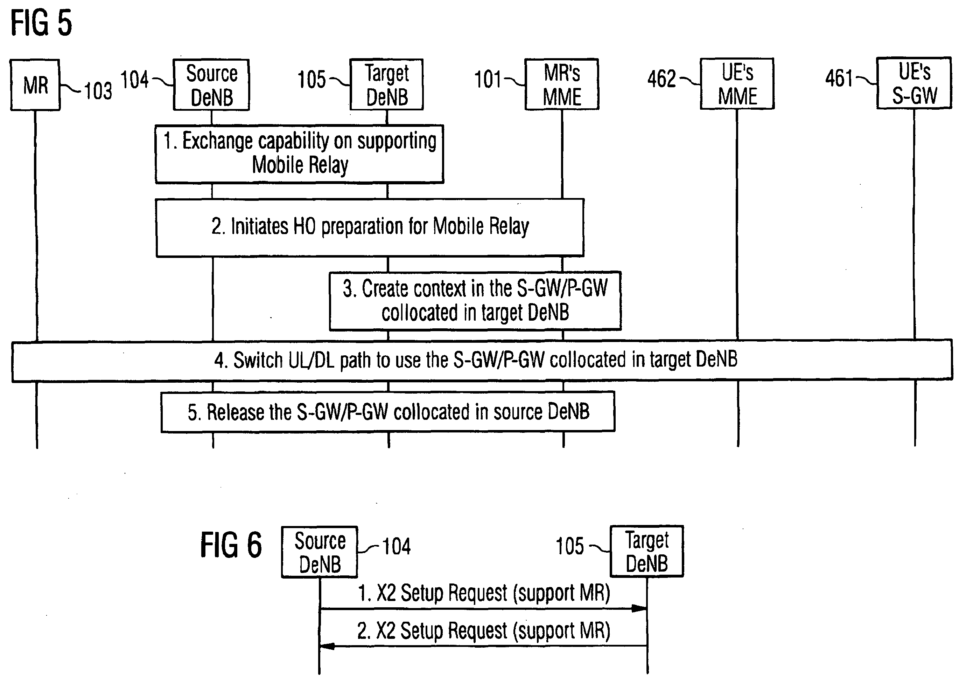

To support the relocation of the gateway functionalities, the following procedure as shown in Figure 5 can be used. It should be noted that, although the different steps in the following figures are shown in a specific order, this order may be changed and that one or more steps may be omitted. This applies throughout the description.
1) The source DeNB and target DeNB exchanges the capability on whether support MR. This ensures the source DeNB only select the eNB supporting MR as the target during the S1/X2 HO for the MR.
2) When the source DeNB detects a need to initiate S1/X2 HO for the MR, it initiates the S1/X2 HO preparation procedure indicating this is a HO for a MR. Upon reception this indication, the target DeNB can prioritize and reserve resource accordingly.
3) The MR's MME creates the necessary context for the S-GW/P-GW functionalities collocated in target DeNB. When there is a need to relocate the MR's MME/S-GW, the MR's MME initiate the relocation procedure. An enhanced DNS procedure is used for the new MME to know the IP address for the S-GW functionality collocated in target DeNB. An enhanced Create Session procedure is used by the MR's S-GW functionality to select the P-GW functionality collocated in the target DeNB for the MR and create the context for the MR. This step may also be omitted.
4) When the gateway functionalities (S-GW/P-GW) in target DeNB are ready, the MR starts to use the new gateways for UL traffic. The MR also initiates switching the DL path in order to use the gateways collocated in target DeNB also for DL traffic.
5) Upon the UL and DL traffic path is switched to use the the gateways (S-GW/P-GW) collocated in the target DeNB, the MR's MME can initiate the context release related to corresponding gateway functionalities (S-GW/P-GW) collocated in the source DeNB.

The described method can provide inter alia one or more of the following advantages:
- Maximize the reuse of Rel-10 Relay and Rel-10 S1/X2 HO procedure. This is more beneficial in product implementation.
- Faster Handover procedure by using a single procedure to relocate the MR's gateway functionalities (S-GW/P-GW).
- Minimize the impact to the network, i.e. only introduce one interface for DeNB, which is the S1-U between DeNBs, etc.
- Less impact in standardization, i.e. only some enhancement to current S1/X2/GTP-C procedure, etc.
- Increased Handover successful rate, i.e. by allowing source DeNB knows whether a candidate eNB supporting mobile relay, and target DeNB can prioritize the HO request for a mobile relay.

In the following, an example implementation will be described that can be used to realize the gateway (GW) relocation for Mobile Relay.

In a first step, the DeNBs can exchange messages for determining whether the target base station or DeNB 105 can support the mobile relay node 103. The message exchange is shown in Figure 6.
1. The source DeNB initiates a X2 setup with the target DeNB. The X2 Setup Request message indicates that the source DeNB supports Mobile Relay.
2. The target DeNB replies with X2 Setup Response indicating the support for Mobile Relay. Both DeNBs can then consider the other node as the candidate for further X2 HO for MR.

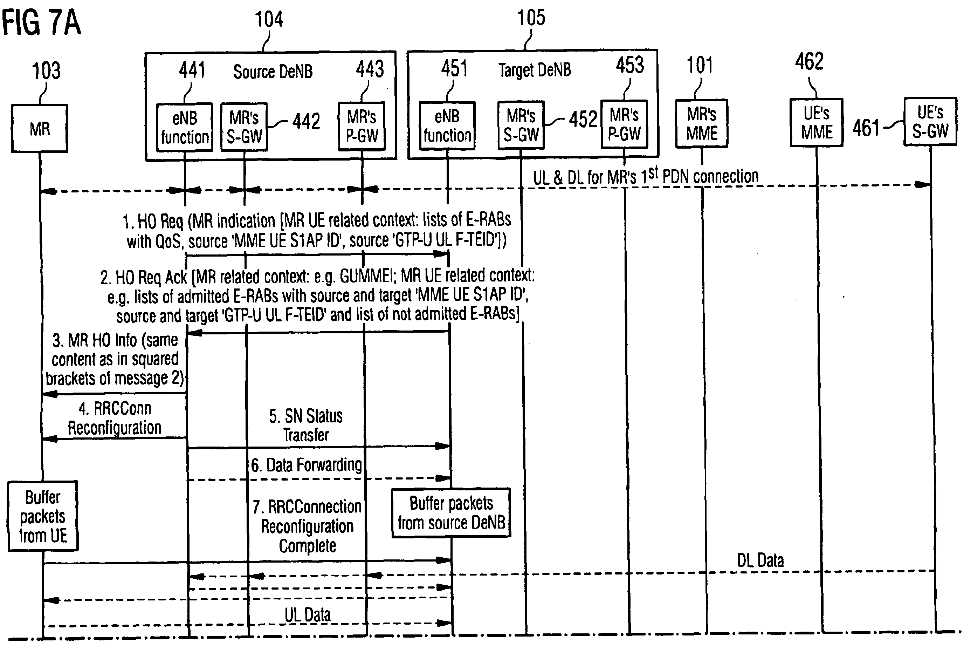

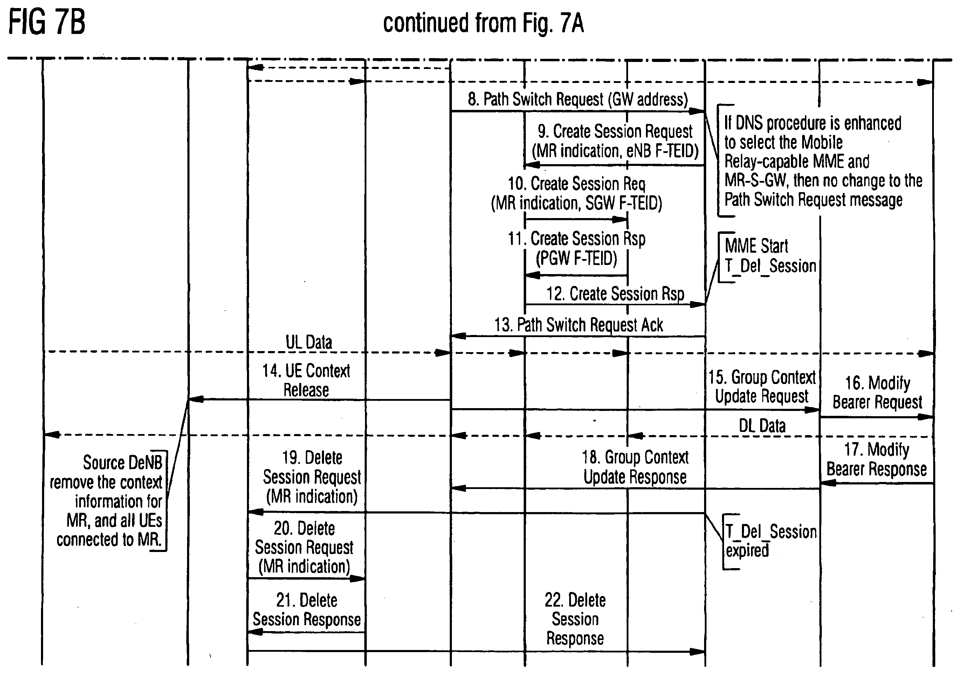

Figure 7 shows a message flow diagram for the handover of the mobile relay node, also called X2 handover (HO) for the mobile relay node as an X2 interface may be used.

In the following, a tunnel endpoint identifier (TEID) is assigned by the receiving end of the GTP tunnel to uniquely identify a tunnel endpoint in the receiving end side of a GTP tunnel. A Full Qualified TEID (F-TEID) contains the IP address of the receiving end of the GTP tunnel and the TEID.

The shown call flow may provide the following enhancements to current X2 HO procedure as defined in 3GPP Rel-10.

Step 1: By knowing the target eNB supports the MR, the source DeNB sends HO Request (Req) message to target DeNB. The HO Req message indicates this is for MR, and includes additional context information for all connected UEs. In detail this information can consist at least of 'eNB/MME UE S1AP ID' and the 'GTP-U F-TEID' used by the MR and source DeNB for the communication between the MR and the source DeNB, and by the source DeNB for the communication between the source DeNB and the UE's MME/S-GW. The exchanged information from source to target DeNB may not be restricted to the lists of the old 'eNB/MME UE S1AP ID' and 'GTP-U F-TEID' as they were used by the source side, but may also contain further information from the source side (source DeNB and/or MR) like the list of E-RAB IDs of the UEs that are connected to the MR and corresponding QoS information, e.g. the Quality Class Indicator (QCI) or even the complete UE specific context that is stored at the source DeNB for each of the UEs that are connected to the MR.

Step 2: The target DeNB replies with the HO Req Ack message. The message includes additional context information for assigned for the UEs. The information includes the S1 AP IDs, S1-U F-TEIDs, etc. The target DeNB may not be able to use the same S1AP IDs and S1-U F-TEIDs as the source DeNB, because they are required to be unique in the DeNB and the target DeNB may already use the values, e.g. for the communication with an MR that is already being served by the target DeNB when the new MR is approaching. Thus these IDs can only be determined by the target DeNB. However, as the target DeNB is informed of the approaching MR in the HO preparation phase by the source DeNB in Step 1, the target DeNB can already reserve and inform the source DeNB about the reserved IDs when returning the corresponding handover preparation acknowledge message. The exchanged information from the target to source side may not be restricted to the list of the 'MME UE S1AP ID' and 'GTP-U UL F-TEID' information, but may additionally consist of information related to the UEs connected to MR like E-RABs-Admitted-List, E-RABs-NotAdmitted-List or the served globally unique MME IDs (GUMMEIs).

Step 3: The source DeNB sends the updated context information for CONNECTED UEs to the MR. This can be new IEs in RRC message, or new RRC message, or new S1/X2 message. In case that the MR reestablishes RRC connection in a non-target, but prepared DeNB, the new DeNB needs to convey the updated context information to MR via new IEs in RRC message, or new RRC message, or new S1/X2 message.

New information elements (IE) may be added to the HO preparation messages from the source DeNB to the target DeNB (Step 1). With these, the source DeNB provides the lists of 'eNB/MME UE S1AP ID' and 'GTP-U F-TEID' values as they are used by the MR and source DeNB for the communication between the MR and the source DeNB, and by the source DeNB for the communication between the source DeNB and the UE's MME/S-GW. The target DeNB then returns this list, but for each of the received values that needs to be replaced, the target DeNB determines and adds a replacement value that has to be used by the MR for the S1 communication over the Un interface to the target DeNB. The latter requires corresponding enhancements to the HO preparation messages in the direction from target DeNB to source DeNB (Step 2). Other possible information to be exchanged as listed in the previous paragraph also may require corresponding enhancements (e.g. IEs) if these is added to existing messages.

A new message to the MR is sent (Step 3) in order to transfer the information being received by the target DeNB. This new message might be sent by the source DeNB after it has decided which DeNB is the selected target DeNB (e.g. for the case that the source DeNB has prepared more than one target DeNBs for the handover of the MR) and before it sends the RRCConnReconfiguration message to the MR (Step 4). This new message can be an S1 or X2 message or even a new RRC message or a new IE in the RRCConnReconfiguration message. Alternatively the existing RRCConnReconfiguration message and the new message may be combined into one new message.

In steps 5 and 6, the SN status is transferred and data forwarding is started.

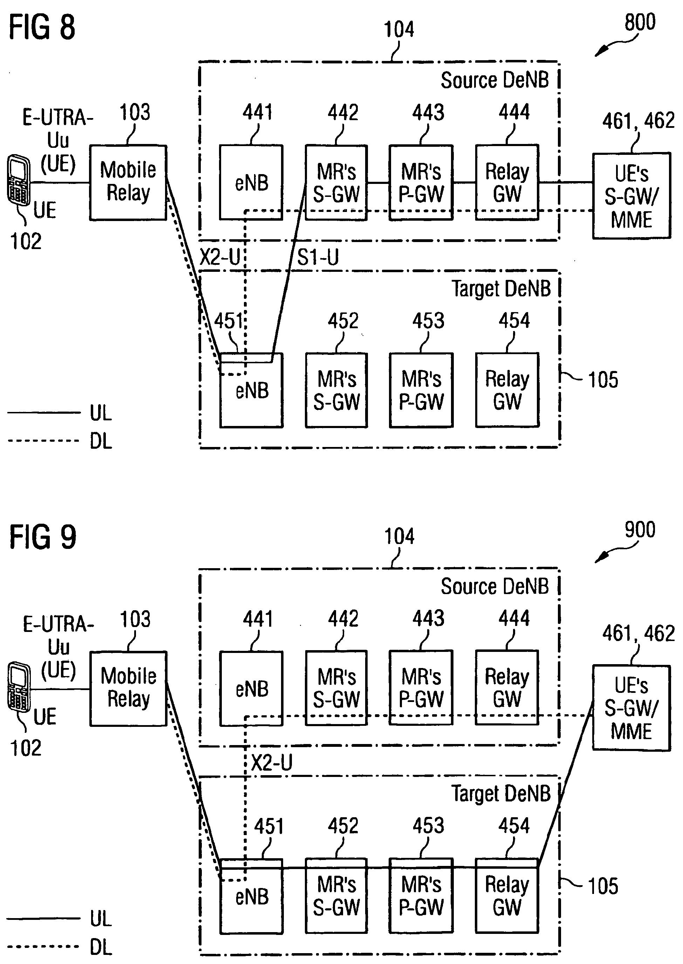

Step 7: After MR connects to the target DeNB, the UL and DL path as shown in the system 800 of Figure 8 are:
- UL: MR → end function in target DeNB → S-GW/P-GW functionalities collocated in source DeNB → UE's S-GW
- DL: UE's S-GW → P-GW functionality collocated in source DeNB → S-GW functionality collocated in source DeNB → end function in source DeNB → end function in target DeNB → MR

Step 8: The target DeNB sends Path Switch Request message to MR's MME to inform that the MR has changed cell. The Path Switch Request message includes the IP address for the S-GW functionality collocated in target DeNB. Another alternative is to enhance the DNS procedure to retrieve the S-GW address (described later). When use the enhanced DNS procedure, there is no need for Path Switch Request message to include the address of the S-GW functionality.

Step 9: MR's MME knows that this is an X2 HO for a MR, so it relocate the MR's gateway functionalities (S-GW/P-GW) from the source DeNB to target DeNB by sending a first Create Session Request message to the S-GW functionality collocated in the target DeNB using the S-GW functionalities' IP address received in Step 8. The Create Session Request message also indicates that this message is for MR's gateways (S-GW/P-GW) relocation. The Create Session Request message includes the GTP-U DL F-TEID assigned by the Target DeNB and triggers that the S-GW functionality sends the Create Session Request message to the P-GW functionality collocated in target DeNB. This message is different to the one currently used for X2 HO with S-GW relocation.

Step 10: Upon the reception of Create Session Request message indicating this is for MR's gateway (S-GW/P-GW) relocation, the S-GW functionality sends the Create Session Request message to the collocated P-GW functionality. The message includes the S5-U S-GW F-TEID.

Step 11: The P-GW returns the Create Session Response message including the S5-U P-GW F-TEID.

Step 12: Upon the reception of the Create Session Response message, the MME starts a timer T_Del_session.

Step 13: Upon the reception of the Path Switch Request Acknowledge message, the target DeNB can route the UL data via the collocated gateway functionalities (S-GW/P-GVV), i.e. MR → eNB function in target DeNB → S-GW/P-GW functionalities collocated in target DeNB → UE's S-GW (as shown in the system 900 of Figure 9)

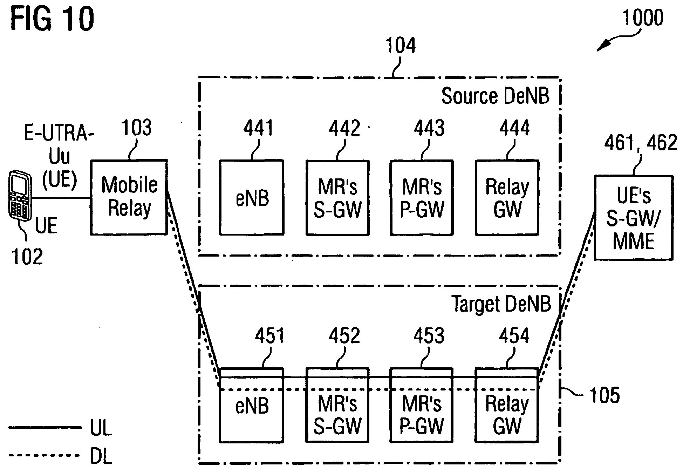

Steps 15-18: Messages are exchanged for updating the group context between the UE's MME and the eNB function of the target DeNB. After Step 18, the UL and DL path are as shown in the system 1000 of Figure 10, i.e. all paths are switched to the target DeNB.

Step 19: When the timer T_Del_session has expired, MME releases the bearers/contexts in the S-GW functionality collocated in the source DeNB by sending a Delete Session Request message to the S-GW functionality. The message includes the "MR indication" that indicates to the S-GW functionality to initiate a delete procedure towards the P-GW functionality.

Step 20: Upon detection of the "MR indication" in the received Delete Session Request message, the S-GW functionality sends the Delete Session Request message with the "MR indication" to the P-GW functionality.

Step 21: The P-GW functionality acknowledges with Delete Session Response message. The P-GW functionality removes the context associated with the handovered MR.

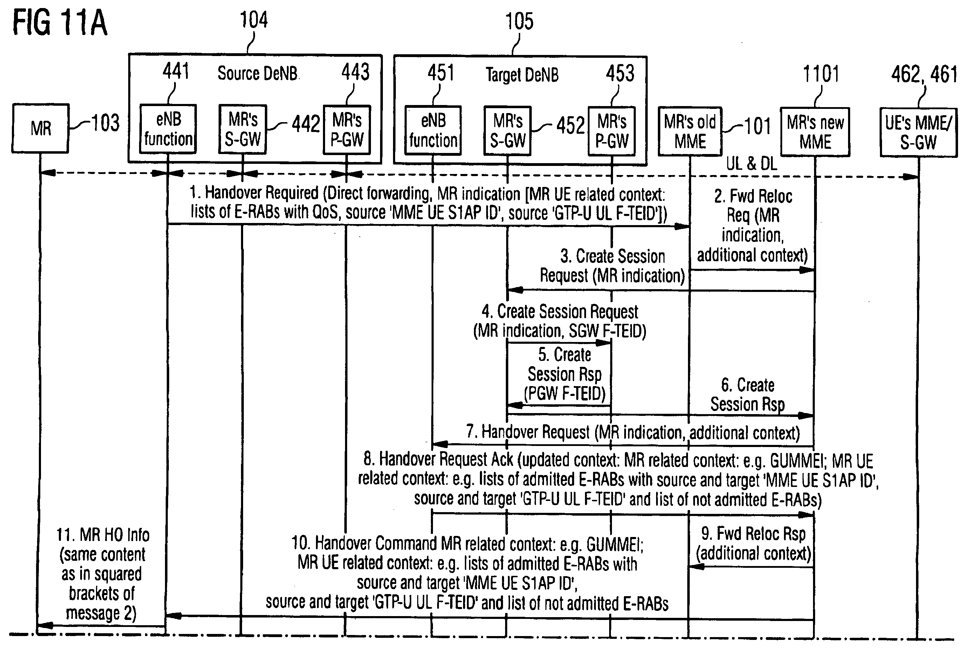

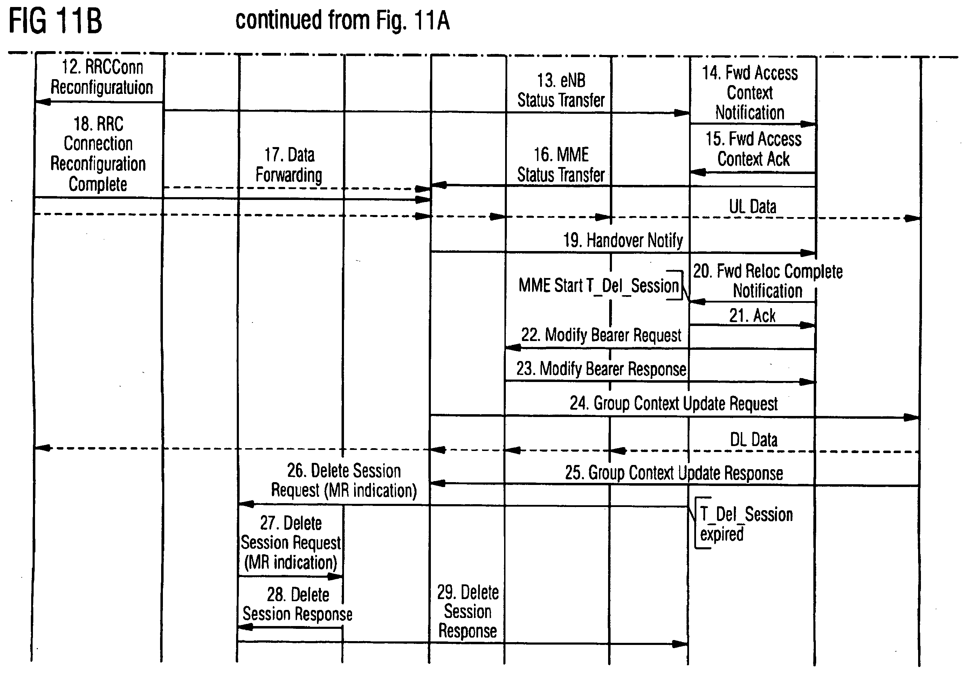

Step 22: The S-GW functionality acknowledges with Delete Session Response message. The S-GW functionality removes the context associated with the MR. In Figure 11, a S1 handover for the mobile relay node is shown. S1 refers to the S1 interface. In the shown call flow, the management of the mobile relay node is transferred from one management unit to another management unit.

The described call flow has following enhancements to current S1 HO procedure defined in 3GPP Rel-10:

Step 1: The DeNB knows whether the target eNB supports Mobile Relay. The source DeNB initiates the S1 HO preparation procedure. The HO Req message indicates this is for MR, and includes additional context information for all CONNECTED UEs. In detail this information consists at least of 'eNB/MME UE S1AP ID' and the 'GTP-U F-TEID' used by the MR and source DeNB for the communication between the MR and the source DeNB, and by the source DeNB for the communication between the source DeNB and the UE's MME/S-GW. The exchanged information from source to target DeNB may not be restricted to the lists of the old 'eNB/MME UE S1AP ID' and 'GTP-U F-TEID' as they were used by the source side, but may also contain further information from the source side (source DeNB and/or MR) like the list of E-RAB IDs of the UEs that are connected to the MR and corresponding QoS information, e.g. the Quality Class Indicator (QCI) or even the complete UE specific context that is stored at the source DeNB for each of the UEs that are connected to the MR.

Step 2: The MR's source MME selects the target MME based on the target DeNB's TAI, eNB ID, and the indication whether the target MME supports MR. Another option is to reuse the current DNS procedure, but create a separate DNS database only to be used for MR's MME/S-GW selection. The MR's source MME sends a Forward Relocation Request message to target MME. The message indicates this is for MR. The message also contains the additional context information for CONNECTED UEs, which is received from Source DeNB.

Step 3: Upon the reception of the enhanced Forward Relocation Request message, the target MME uses an enhanced DNS procedure to retrieve the IP address for the S-GW functionality collocated in target DeNB. The target MME then send Create Session Request message indicating the relocation of MR's gateway functionalities (S-GW/P-GW) to the S-GW functionality collocated in target DeNB, and trigger the S-GW functionality to send the Create Session Request message to the P-GW functionality collocated in target DeNB.

Step 4: Upon the reception of Create Session Request message indicating this is for MR's gateways functionality (S-GW/P-GW) relocation, the S-GW functionality sends the Create Session Request message to the collocated P-GW functionality. The Create Session Request message includes the GTP-U DL F-TEID assigned by the Target DeNB.

Step 5: The P-GW returns the Create Session Response message including the S5-U P-GWF-TEID.

Step 6: The S-GW functionality acknowledges with Create Session Response message.

Step 7: The target MME sends HO Req to target DeNB. The HO Req message indicates this is for MR, so the target DeNB can assign MR higher priority during resource reservation, e.g. pre-empt the resource used by a normal UE. The message contains additional context information received from source MME.

Step 8: The target DeNB reply with the HO Req Ack message. The message includes additional context information for assigned for the UEs. The information includes the S1 AP IDs, S1-U F-TEIDs, etc. The target DeNB may not be able to use the same S1AP IDs and S1-U F-TEIDs as the source DeNB, because they are required to be unique in the DeNB and the target DeNB may already use the values, e.g. for the communication with an MR that is already being served by the target DeNB when the new MR is approaching. Thus these IDs can only be determined by the target DeNB. However, as the target DeNB is informed of the approaching MR in the HO preparation phase by the source DeNB, the target DeNB can already reserve and inform the source DeNB about the reserved IDs when returning the corresponding handover preparation acknowledge message. The exchanged information from the target to source side may not be restricted to the list of the 'MME UE S1AP ID' and 'GTP-U UL F-TEID' information, but may additionally consist of information related to the UEs connected to MR like E-RABs-Admitted-List, E-RABs-NotAdmitted-List or the served globally unique MME IDs (GUMMEIs).

Step 9: The target MME sends Forward Relocation Response message to source MME. The message also contains the updated context information received from target DeNB.

Step 10: The source MME send HO Req Ack message to source DeNB. The message includes the updated context information received from target MME.

Step 11: The source DeNB send the updated context information for CONNECTED UEs to the MR. This can be new IEs in RRC message, or new RRC message, or new S1/X2 message. In case that the MR reestablishes RRC connection in a non-target, but prepared DeNB, the new DeNB might need to convey the updated context information to MR.

The use of S1AP based handover procedures for that purpose as well as further details with respect to the exchanged information may require corresponding enhancements, e.g. new information elements (IE), that have to be added to the HO preparation messages from the source DeNB to the target DeNB (Step 1). With these, the source DeNB provides the lists of 'eNB/MME UE S1AP ID' and 'GTP-U F-TEID' values as they are used by the MR and source DeNB for the communication between the MR and the source DeNB, and by the source DeNB for the communication between the source DeNB and the UE's MME/S-GW. The target DeNB then returns this list, but for each of the received values that needs to be replaced the target DeNB determines and adds a replacement value that has to be used by the MR for the S1 communication over the Un interface to the target DeNB. The latter requires corresponding enhancements to the HO preparation messages in the direction from target DeNB to source DeNB (Step 8). Other possible information to be exchanged as listed in the previous paragraph also would require corresponding enhancements (e.g. IEs) if these is added to existing messages.

A new message to the MR is needed (Step 11) in order to the transfer the information being received from the target DeNB. This new message has to be sent by the source DeNB after it has decided which DeNB is the selected target DeNB and before it sends the RRCConnReconfiguration message to the MR (Step 12). This message can be an S1 or X2 message or even a new RRC message or a new IE in the RRCConnReconfiguration message. Alternatively the existing RRCConnReconfiguration message and the new message may be combined into one new message.

Steps 13 to 19: Messages are exchanged for transferring status information and data.

Step 20: Upon receipt of the Forward Relocation Complete Notification message, the source MME starts a timer T_Del_Session.

Step 24-25: After the Group Context Update procedure is completed, the DL data can be routed via UE's S-GW → P-GW functionality collocated in target DeNB → S-GWfunctionality collocated in target DeNB → eNB function in target DeNB → MR.

Step 26: When the timer T_Del_session has expired, MME releases the bearers/contexts in the S-GW functionality collocated in the source DeNB by sending a Delete Session Request message to the S-GW functionaltiy. The message includes the "MR indication" that indicates to the S-GW functionaltiy to initiate a delete procedure towards the P-GW functionality.

Step 27: Upon see the "MR indication" in the received Delete Session Request message, the S-GW functionality sends the Delete Session Request message with the "MR indication" to the P-GW functionality.

Step 28: The P-GW functionality acknowledges with Delete Session Response message. The P-GW functionality removes the context associated with the MR.

Step 29: The S-GW functionality acknowledges with Delete Session Response message. The S-GW functionality removes the context associated with the MR.

It should be noted that, although the above described figures shows the exchange of messages and data transfers in a specific order, the order may be changed and also one or more of the messages and data transfers may be omitted while still providing the desired functionality.

Having regard to the subject matter disclosed herein, it should be mentioned that, although some embodiments refer to a "base station", "eNB", etc., it should be understood that each of these references is considered to implicitly disclose a respective reference to the general term "network component" or, in still other embodiments, to the term "network access node". Also other terms which relate to specific standards or specific communication techniques are considered to implicitly disclose the respective general term with the desired functionality.

It should further be noted that a management unit as disclosed herein is not limited to dedicated entities as described in some embodiments. Rather, the herein disclosed subject matter may be implemented in various ways in various locations in the communication network while still providing the desired functionality.

According to embodiments of the invention, any suitable entity (e.g. components, units and devices) disclosed herein, e.g. the configuration unit, are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein.

It should be noted that the term "comprising" does not exclude other elements or steps. It may also be possible in further refinements of the invention to combine features from different embodiments described herein above. It should also be noted that reference signs in the claims should not be construed as limiting the scope of the claims.

### List of Abbreviations

- CN: Core Network
- DeNB: Donor eNB
- DL: Downlink
- eNB: Base station
- EPS: Enhanced Packet Service
- E-RAB: E-UTRAN Radio Access Bearer
- EUTRAN: Enhanced UTRAN
- F-TEID: Fully Qualified TEID
- GTP: GPRS Tunnelling Protocol
- GTP-U: GTP user plane
- GW: Gateway
- HO: Handover
- IE: Information Element
- IP: Internet Protocol
- LTE: Long Term Evolution
- MME: Mobility Management Entity
- MR: Mobile Relay
- P-GW: PDN Gateway
- PDN: Packet Data Network
- QCI: Quality of service Class Identifier
- QoS: Quality of Service
- RAN: Radio Access Network
- RN: Relay Node
- RRC: Radio Resource Control
- S1AP: S1 Application Protocol
- S-GW: Serving Gateway
- TEID: Tunnel Endpoint Identifier
- UE: User Equipment
- UL: Uplink
- Un: Interface between RN and DeNB
- UTRAN: Universal Terrestrial RAN
- Uu: Interface between UE and RN or UE and DeNB
- X2AP: X2 Application Protocol

## Claims

1. A method for handing over a mobile relay node (103) from a source base station (104) to a target base station (105), wherein a user equipment (102) is adapted to communicate with a further user equipment (106) using a communication path via the mobile relay node and the source base station by using a first gateway functionality (140) of the source base station, and wherein a management unit (101) is adapted to manage the communication path,
the method comprising
preparing, by the management unit (101), a handover of the mobile relay node (103) from the source base station (104) to the target base station (105),
allocating, by the management unit (101), resources in the target base station (105) for providing a second gateway functionality (150) for a further communication path for the user equipment (102) via the mobile relay node (103) and the target base station (105) to the further user equipment (106),
establishing, by the management unit (101), the second gateway functionality (150) for the further communication path for the user equipment (102) via the mobile relay node (103) and the target base station (105) to the further user equipment (106), and
handing over, by the management unit (101), the mobile relay node (103) from the source base station (104) to the target base station (105).

2. The method as set forth in claim 1, wherein
establishing a gateway functionality comprises relocating information being associated with the mobile relay node (103) from the source base station (104) to the target base station (105).

3. The method as set forth in claim 2, wherein the information being associated with the mobile relay node (103) comprises information about the user equipment (102) and further user equipments being connected to the mobile relay node.

4. The method as set forth in any one of the preceding claims, further comprising setting up the communication path, by the management unit (101), between the target base station (105) and the first gateway functionality (140) in the source base station (104).

5. The method as set forth in claim 4, wherein allocating resources comprises allocating resources being associated with the second gateway functionality (150), in order to setup the communication path between the target base station (105) and the second gateway functionality (150).

6. The method as set forth in any one of the preceding claims, the method further comprising releasing resources within the source base station (104) being associated with the first gateway functionality (140) after the handover.

7. The method as set forth in any one of the preceding claims, the method further comprising,
before initiating the handover, exchanging messages between the source base station (104) and the target base station (105) in order to determine whether the target base station (105) has the capability to support a mobile relay node.

8. The method as set forth in any one of the preceding claims, wherein handing over the mobile relay node (103) comprises changing the communication path from the first gateway functionality (140) to the further communication path of the second gateway functionality (150).

9. The method as set forth in any one of the preceding claims, the method further comprising
transferring the management of the mobile relay node (103) from the management unit (101) to a further management unit (1101).

10. The method as set forth in claim 9, wherein transferring the management of the mobile relay node (103) comprises sending information being associated with the gateway functionalities for the mobile relay node (103) from the management unit (101) to the further management unit (1101).

11. The method as set forth in claim 10, further comprising establishing, by the further management unit (1101), a communication path for the user equipment (102) via the second gateway functionality (150).

12. A management unit (101) for handing over a mobile relay node (103) from a source base station (104) to a target base station (105), wherein a user equipment (102) is adapted to communicate with a further user equipment (106) using a communication path via the mobile relay node (103) and the source base station (104) by using a first gateway functionality (140) of the source base station (104), and wherein the management unit (101) is adapted to manage the communication path,
**characterized in that** the management unit (101) comprises
a control unit being adapted to prepare a handover of the mobile relay node from the source base station to the target base station, being adapted to allocate resources in the target base station for providing a second gateway functionality for a further communication path for the user equipment via the mobile relay node and the target base station to the further user equipment, being adapted to establish the second gateway functionality for the further communication path for the user equipment via the mobile relay node and the target base station to the further user equipment, and being adapted to hand over the mobile relay node from the source base station to the target base station.

13. A network system (100) for handing over a mobile relay node (103) from a source base station (104) to a target base station (105), wherein a user equipment (102) is adapted to communicate with a further user equipment (106) using a communication path via the mobile relay node (103) and the source base station (104) by using a first gateway functionality (140) of the source base station (104), the network system comprising a management unit (101) as set forth in claim 12.

## Patentansprüche

1. Verfahren zum Übergeben eines mobilen Verstärkungsknotens (103) von einer Quellbasisstation (104) zu einer Zielbasisstation (105), wobei ein Anwendergerät (102) dafür ausgelegt ist, mit einem weiteren Anwendergerät (106), das einen Kommunikationspfad über den mobilen Verstärkungsknoten und die Quellbasisstation verwendet, unter Nutzung einer ersten Gateway-Funktionalität (140) der Quellbasisstation zu kommunizieren, und wobei eine Managementeinheit (101) dafür ausgelegt ist, den Kommunikationspfad zu managen,
wobei das Verfahren Folgendes umfasst:
Vorbereiten durch die Managementeinheit (101) einer Übergabe des mobilen Verstärkungsknotens (103) von der Quellbasisstation (104) zu der Zielbasisstation (105),
Zuweisen durch die Managementeinheit (101) von Betriebsmitteln in der Zielbasisstation (105), um eine zweite Gateway-Funktionalität (150) für einen weiteren Kommunikationspfad für das Anwendergerät (102) über den mobilen Verstärkungsknoten (103) und die Zielbasisstation (105) zu dem weiteren Anwendergerät (106) bereitzustellen,
Aufbauen durch die Managementeinheit (101) der zweiten Gateway-Funktionalität (150) für den weiteren Kommunikationspfad für das Anwendergerät (102) über den mobilen Verstärkungsknoten (103) und die Zielbasisstation (105) zu dem weiteren Anwendergerät (106) und
Übergeben durch die Managementeinheit (101) des mobilen Verstärkungsknotens (103) von der Quellbasisstation (104) zu der Zielbasisstation (105).

2. Verfahren nach Anspruch 1, wobei
das Aufbauen einer Gateway-Funktionalität das Umadressieren von Informationen, die dem mobilen Verstärkungsknoten (103) zugeordnet sind, von der Quellbasisstation (104) zu der Zielbasisstation (105) umfasst.

3. Verfahren nach Anspruch 2, wobei die Informationen, die dem mobilen Verstärkungsknoten (103) zugeordnet sind, Informationen über das Anwendergerät (102) und weitere Anwendergeräte, die mit dem mobilen Verstärkungsknoten verbunden sind, umfassen.

4. Verfahren nach einem der vorhergehenden Ansprüche, das ferner das Einrichten des Kommunikationspfades durch die Managementeinheit (101) zwischen der Zielbasisstation (105) und der ersten Gateway-Funktionalität (140) in der Quellbasisstation (104) umfasst.

5. Verfahren nach Anspruch 4, wobei das Zuweisen von Betriebsmitteln das Zuweisen von Betriebsmitteln, die der zweiten Gateway-Funktionalität (150) zugeordnet sind, umfasst, um den Kommunikationspfad zwischen der Zielbasisstation (105) und der zweiten Gateway-Funktionalität (150) einzurichten.

6. Verfahren nach einem der vorhergehenden Ansprüche, wobei das Verfahren ferner das Freigeben von Betriebsmitteln in der Quellbasisstation (104), die der ersten Gateway-Funktionalität (140) zugeordnet sind, nach der Übergabe umfasst.

7. Verfahren nach einem der vorhergehenden Ansprüche, wobei das Verfahren ferner Folgendes umfasst:
vor dem Einleiten der Übergabe Austauschen von Nachrichten zwischen der Quellbasisstation (104) und der Zielbasisstation (105), um zu bestimmen, ob die Zielbasisstation (105) die Fähigkeit hat, einen mobilen Verstärkungsknoten zu unterstützen.

8. Verfahren nach einem der vorhergehenden Ansprüche, wobei das Übergeben des mobilen Verstärkungsknotens (103) das Ändern des Kommunikationspfades von der ersten Gateway-Funktionalität (140) zu dem weiteren Kommunikationspfad der zweiten Gateway-Funktionalität (150) umfasst.

9. Verfahren nach einem der vorhergehenden Ansprüche, wobei das Verfahren ferner Folgendes umfasst:
Übertragen des Managements des mobilen Verstärkungsknotens (103) von der Managementeinheit (101) zu einer weiteren Managementeinheit (1101).

10. Verfahren nach Anspruch 9, wobei das Übertragen des Managements des mobilen Verstärkungsknotens (103) das Senden von Informationen, die den Gateway-Funktionalitäten für den mobilen Verstärkungsknoten (103) zugeordnet sind, von der Managementeinheit (101) zu der weiteren Managementeinheit (1101) umfasst.

11. Verfahren nach Anspruch 10, das ferner das Aufbauen eines Kommunikationspfades für das Anwendergerät (102) über die zweite Gateway-Funktionalität (150) durch die Managementeinheit (1101) umfasst.

12. Managementeinheit (101) für die Übergabe eines mobilen Verstärkungsknotens (103) von einer Quellbasisstation (104) zu einer Zielbasisstation (105), wobei ein Anwendergerät (102) dafür ausgelegt ist, mit einem weiteren Anwendergerät (106), das einen Kommunikationspfad über den mobilen Verstärkungsknoten (103) und die Quellbasisstation (104) verwendet, unter Nutzung einer ersten Gateway-Funktionalität (140) der Quellbasisstation (104) zu kommunizieren, und wobei die Managementeinheit (101) dafür ausgelegt ist, den Kommunikationspfad zu managen,
**dadurch gekennzeichnet, dass** die Managementeinheit (101) Folgendes umfasst:
eine Steuereinheit, die dafür ausgelegt ist, eine Übergabe des mobilen Verstärkungsknotens von der Quellbasisstation zu der zielbasisstation vorzubereiten, dafür ausgelegt ist, Betriebsmittel in der Zielbasisstation zuzuweisen, um eine zweite Gateway-Funktionalität für einen weiteren Kommunikationspfad für das Anwendergerät über den mobilen Verstärkungsknoten und die Zielbasisstation zu dem weiteren Anwendergerät bereitzustellen, dafür ausgelegt ist, die zweite Gateway-Funktionalität für den weiteren Kommunikationspfad für das Anwendergerät über den mobilen Verstärkungsknoten und die Zielbasisstation zu dem weiteren Anwendergerät aufzubauen, und dafür ausgelegt ist, den mobilen Verstärkungsknoten von der Quellbasisstation an die Zielbasisstation zu übergeben.

13. Netzsystem (100) für die Übergabe eines mobilen Verstärkungsknotens (103) von einer Quellbasisstation (104) an eine Zielbasisstation (105), wobei ein Anwendergerät (102) dafür ausgelegt ist, mit einem weiteren Anwendergerät (106) unter Verwendung eines Kommunikationspfades über den mobilen Verstärkungsknoten (103) und die Quellbasisstation (104) unter Verwendung der ersten Gateway-Funktionalität (140) der Quellbasisstation (104) zu kommunizieren, wobei das Netzsystem eine Managementeinheit (101) nach Anspruch 12 umfasst.

## Revendications

1. Un procédé de transfert d'un noeud relais mobile (103) d'une station de base source (104) vers une station de base cible (105), dans lequel un équipement d'utilisateur (102) est adapté de façon à communiquer avec un autre équipement d'utilisateur (106) au moyen d'un trajet de communication par l'intermédiaire du noeud relais mobile et de la station de base source au moyen d'une première fonctionnalité de passerelle (140) de la station de base source, et dans lequel une unité de gestion (101) est adaptée de façon à gérer le trajet de communication,
le procédé comprenant
la préparation, par l'unité de gestion (101), d'un transfert du noeud relais mobile (103) de la station de base source (104) à la station de base cible (105),
l'attribution, par l'unité de gestion (101), de ressources dans la station de base cible (105) pour la fourniture d'une deuxième fonctionnalité de passerelle (150) pour un autre trajet de communication pour l'équipement d'utilisateur (102) par l'intermédiaire du noeud relais mobile (103) et de la station de base cible (105) à l'autre équipement d'utilisateur (106),
l'établissement, par l'unité de gestion (101), de la deuxième fonctionnalité de passerelle (150) pour l'autre trajet de communication pour l'équipement d'utilisateur (102) par l'intermédiaire du noeud relais mobile (103) et de la station de base cible (105) à l'autre équipement d'utilisateur (106), et
le transfert, par l'unité de gestion (101), du noeud relais mobile (103) de la station de base source (104) à la station de base cible (105).

2. Le procédé selon la revendication 1, dans lequel
l'établissement d'une fonctionnalité de passerelle comprend la relocalisation d'informations qui sont associées au noeud relais mobile (103) de la station de base source (104) à la station de base cible (105).

3. Le procédé selon la revendication 2, dans lequel les informations qui sont associées au noeud relais mobile (103) comprennent des informations relatives à l'équipement d'utilisateur (102) et aux autres équipements d'utilisateur qui sont raccordés au noeud relais mobile.

4. Le procédé selon l'une quelconque des revendications précédentes, comprenant en outre l'établissement du trajet de communication, par l'unité de gestion (101), entre la station de base cible (105) et la première fonctionnalité de passerelle (140) dans la station de base source (104).

5. Le procédé selon la revendication 4, dans lequel l'attribution de ressources comprend l'attribution de ressources qui sont associées à la deuxième fonctionnalité de passerelle (150), de façon à établir le trajet de communication entre la station de base cible (105) et la deuxième fonctionnalité de passerelle (150).

6. Le procédé selon l'une quelconque des revendications précédentes, le procédé comprenant en outre la libération de ressources à l'intérieur de la station de base source (104) qui sont associées à la première fonctionnalité de passerelle (140) après le transfert.

7. Le procédé selon l'une quelconque des revendications précédentes, le procédé comprenant en outre,
avant le lancement du transfert, un échange de messages entre la station de base source (104) et la station de base cible (105) de façon à déterminer si la station de base cible (105) possède la capacité de prendre en charge un noeud relais mobile.

8. Le procédé selon l'une quelconque des revendications précédentes, dans lequel le transfert du noeud relais mobile (103) comprend la modification du trajet de communication de la première fonctionnalité de passerelle (140) à l'autre trajet de communication de la deuxième fonctionnalité de passerelle (150).

9. Le procédé selon l'une quelconque des revendications précédentes, le procédé comprenant en outre
le transfert de la gestion du noeud relais mobile (103) de l'unité de gestion (101) à une autre unité de gestion (1101).

10. Le procédé selon la revendication 9, dans lequel le transfert de la gestion du noeud relais mobile (103) comprend l'envoi d'informations qui sont associées aux fonctionnalités de passerelle pour le noeud relais mobile (103) de l'unité de gestion (101) à l'autre unité de gestion (1101).

11. Le procédé selon la revendication 10, comprenant en outre l'établissement, par l'autre unité de gestion (1101), d'un trajet de communication pour l'équipement d'utilisateur (102) par l'intermédiaire de la deuxième fonctionnalité de passerelle (150).

12. Une unité de gestion (101) de transfert d'un noeud relais mobile (103) d'une station de base source (104) à une station de base cible (105), dans laquelle un équipement d'utilisateur (102) est adapté de façon à communiquer avec un autre équipement d'utilisateur (106) au moyen d'un trajet de communication par l'intermédiaire du noeud relais mobile (103) et de la station de base source (104) au moyen d'une première fonctionnalité de passerelle (140) de la station de base source (104), et dans laquelle l'unité de gestion (101) est adaptée de façon à gérer le trajet de communication, **caractérisé en ce que** l'unité de gestion (101) comprend
une unité de commande qui est adaptée de façon à préparer un transfert du noeud relais mobile de la station de base source à la station de base cible, qui est adaptée de façon à attribuer des ressources dans la station de base cible pour la fourniture d'une deuxième fonctionnalité de passerelle pour un autre trajet de communication pour l'équipement d'utilisateur par l'intermédiaire du noeud relais mobile et de la station de base cible à l'autre équipement d'utilisateur, qui est adaptée de façon à établir la deuxième fonctionnalité de passerelle pour l'autre trajet de communication pour l'équipement d'utilisateur par l'intermédiaire du noeud relais mobile et de la station de base cible à l'autre équipement d'utilisateur, et qui est adaptée de façon à transférer le noeud relais mobile de la station de base source à la station de base cible.

13. Un système de réseau (100) destiné au transfert d'un noeud relais mobile (103) d'une station de base source (104) à une station de base cible (105), dans lequel un équipement d'utilisateur (102) est adapté de façon à communiquer avec un autre équipement d'utilisateur (106) au moyen d'un trajet de communication par l'intermédiaire du noeud relais mobile (103) et de la station de base source (104) au moyen d'une première fonctionnalité de passerelle (140) de la station de base source (104), le système de réseau comprenant une unité de gestion (101) selon la revendication 12.
